# EUROPÄISCHE PATENTANMELDUNG

(11) **EP 0 748 844 A1**
(43) Veröffentlichungstag der Anmeldung: **18.12.1996**
(21) Anmeldenummer: 96810293.9
(22) Anmeldetag: 06.05.1996
(51) Int. Cl.: C08L 55/02, C08K 13/02

(54) **Stabilisierte PVC-Zusammensetzungen**

(30) Priorität: 17.05.1995 CH 1457/95
(71) Anmelder: CIBA-GEIGY AG, 4002 Basel (CH)
(72) Erfinder: Kaufhold, Johannes, 64678 Lindenfels (DE); Sander, Hans-Jürgen, 64653 Lorsch (DE); Wehner, Wolfgang, Dr., 64372 Ober-Ramstadt (DE)

(57) **Zusammenfassung**

Es werden Zusammensetzungen beschrieben, die
(a) 20-75 Gew.-% eines Vinylchlorid-Homopolymeren (PVC),
(b) 80-25 Gew.-% ABS,
(c) mindestens eine Organozinnverbindung aus der Klasse der Organozinnmercaptide, -sulfide und/oder -carboxylate, sowie
(d) mindestens ein Oxid und/oder Hydroxid eines Alkali- oder Erdalkalimetalls enthalten.
Diese Zusammensetzungen weisen ein verbesserte thermische und mechanische Belastbarkeit auf und können insbesondere gut im Spritzgußverfahren verarbeitet werden.

## Beschreibung

Die Erfindung betrifft Zusammensetzungen aus einem Vinylhalogenid-Homopolymeren (PVC) und einem thermoplastischen Copolymerisat auf Basis von Styrol, Butadien und Acrylnitril (ABS), die mindestens eine Organozinnverbindung und ein Oxid oder Hydroxid eines Alkali- oder Erdalkalimetalls als Stabilisatorkombination enthalten, die Verwendung dieser Zusammensetzungen und der Stabilisatorkombination sowie ein Verfahren zum Stabilisieren von PVC-Formmassen.

Organozinnverbindungen werden üblicherweise als Stabilisatoren bei der Spritzgußverarbeitung von PVC/ABS Compounds eingesetzt. Bei solchen Verfahren kann das Material auf zweierlei Weise belastet werden: Zum einen durch Scherkräfte ("frikativ") und zum anderen durch hohe Temperaturen. In beiden Fällen steigt die Beanspruchung bei längeren Verweilzeiten im Verarbeitungsgerät. Für derartige Anwendungen sucht man weiterhin nach wirksamen Stabilisatorkombinationen, welche einen größtmöglichen Schutz gegen den Abbau durch thermische und frikative Belastungen bieten.

Der kombinierte Einsatz von Organozinn-Verbindungen, Magnesiumoxid und Hydrotalciten ist für PVC bekannt (EP-A-0 256 872).

Es wurde nun gefunden, daß der Einsatz bestimmter Zinnstabilisatoren in Kombination mit Alkali- oder Erdalkali- hydroxiden bzw. -oxiden zu überraschend guten Stabitisatoreigenschaften für PVC/ABS Compounds und Blends führt.

Die Erfindung betrifft somit eine Zusammensetzung enthaltend
(a) 20-75 Gew.-Teile eines Vinylchlorid-Homopolymeren (PVC),
(b) 80-25 Gew.-Teile ABS,
(c) mindestens eine Organozinnverbindung einer der Formeln I bis VII

   [R¹]ᵢSn[-Q-R²]₄₋ᵢ (I)

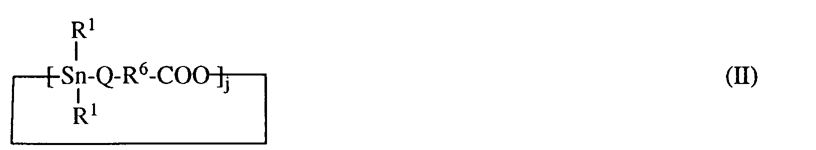

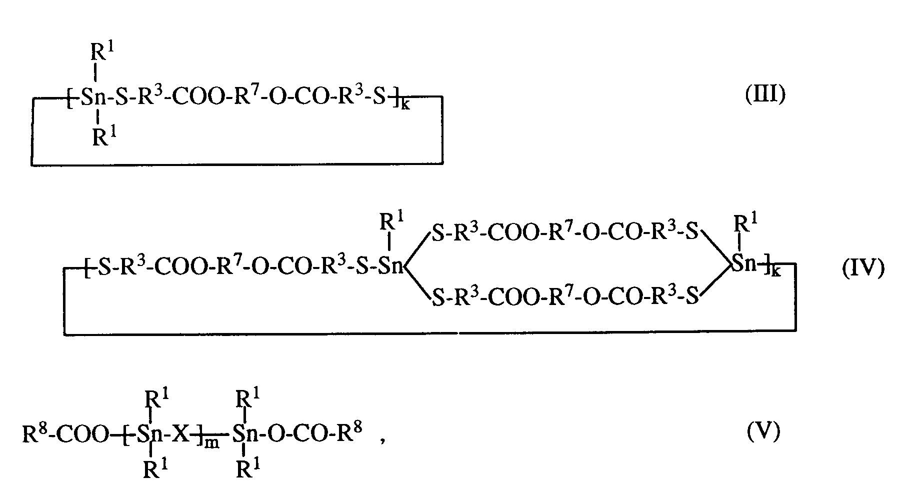

   RₚSnS_{q} (VI)

   oder

   [RₚSnS_{q}]ᵣ (VII)

   worin
   R und
   R¹ unabhängig voneinander C₁-C₁₂-Alkyl oder C₃-C₁₁-Alkoxycarbonylethyl bedeuten,
   Q die Bedeutung von -S- oder -O-CO- hat und,
   R², wenn Q für -S- steht, C₈-C₁₈-Alkyl oder ein Rest -R³-COO-R⁴ oder -R³-O-CO-R⁴ ist,
   R², wenn Q für -O-CO- steht, C₁-C₁₈-Alkyl, C₂-C₁₈-Alkenyl, Phenyl, durch C₁-C₄-Alkyl substituiertes Phenyl, oder ein Rest -CH=H-COO-R⁵ ist,
   R³ Methylen, Ethylen oder o-Phenylen,
   R⁴ C₅-C₁₈-Alkyl,
   R⁵ C₁-C₁₈-Alkyl, C₅-C₇-Cycloalkyl oder Benzyl bedeuten,
   R⁶, wenn Q für -S- steht, Methylen, Ethylen oder o-Phenylen,
   R⁶, wenn Q für -O-CO- steht, C₁-C₈-Alkylen, o-Phenylen oder eine Gruppe -CH=CH-bedeutet,
   R⁷ C₂-C₄-Alkylen oder durch -O- unterbrochenes C₄-C₈-Alkylen darstellt,
   R⁵ C₁-C₁₈-Alkyl, C₂-C₁₈-Alkenyl, Phenyl, durch C₁-C₄-Alkyl substituiertes Phenyl, oder ein Rest -CH=H-COO-R⁵ ist,
   X unabhängig voneinander die Bedeutung -O- oder -O-CO-R⁹-COO- hat,
   R⁹ C₁-C₈-Alkylen, o-Phenylen oder eine Gruppe -CH=CH- bedeutet,
   p 1 oder 2, q [(4-p)/2] und r > 1 sind,
   i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen,
   sowie
(d) mindestens ein Oxid und/oder Hydroxid eines Alkali- oder Erdalkalimetalls.

Die oben und in der gesamten Beschreibung sowie in den Patentansprüchen verwendete abgekürzte Schreibweise -COO- bedeutet die Gruppierung 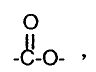 die Schreibweise -O-CO- die Gruppierung

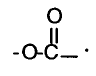

R¹, R², R⁴, R⁵ und R⁸ als Alkyl sind im Rahmen der jeweils angegebenen Anzahl der C-Atome z.B. Methyl, Ethyl, Propyl, Isopropyl, Butyl, Isobutyl, tert-Butyl, Pentyl, Hexyl, Heptyl, Octyl, Isooctyl, Nonyl, Decyl, Undecyl, Dodecyl, Tridecyl, Tetradecyl, Pentadecyl, Hexadecyl, Heptadecyl oder Octadecyl.

Isooctyl bedeutet die Alkylreste des aus dem Oxoprozess stammenden Gemisches von primären verzweigten Alkoholen R'CH₂OH, wobei R' eine verzweigte Heptylgruppe ist (Merck Index 10th.ed., 5041).

R als Alkyl bedeutet bevorzugt n- und iso-Alkylreste, besonders bevorzugt Methyl, Ethyl und n-Butyl.

R¹ hat als Alkyl bevorzugt die Bedeutung von Methyl, Butyl oder Octyl.
R und R¹ als C₃-C₁₁-Alkoxycarbonylethyl bedeuten C₁-C₈-Alkyl-O-CO-CH₂-CH₂-.

R² und R⁸ als C₂-C₁₈-Alkenyl bedeuten u.a. Ethenyl (Vinyl), Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Heptadec-8-enyl, n-Octadec-2-enyl, n-Octadec-4-enyl.

Die Bedeutung von R² und R⁸ als mit C₁-C₄-Alkyl substituiertes Phenyl umfaßt beispielsweise Methylphenyl, Dimethylphenyl, Trimethylphenyl, Ethylphenyl, Diethylphenyl, Isopropylphenyl, tert-Butylphenyl.

R², R⁶, R⁸ und R⁹ als -CH=CH-COO-R⁵ beziehungsweise -CH=CH- leiten sich von Maleinsäure oder Fumarsäure ab, vorzugsweise von Maleinsäure.

R⁵ als C₅-C₇-Cycloalkyl ist Cyclopentyl, Cyclohexyl oder Cycloheptyl, vorzugsweise Cyclopentyl oder Cyclohexyl, vor allem Cyclohexyl.

R⁶ und R⁷ als Alkylen bedeuten einen zweiwertigen Alkylrest; im Rahmen der angegebenen Kettenlängen sind R⁶ und R⁷ z.B. Methylen, Ethylen, -CH(CH₃)-CH₂-, -(CH₂)₃-, -(CH₂)₄-, -(CH₂)₆-, -(CH₂)₈-, -CH₂-CH(C₂H₅)-(CH₂)₄-, -CH₂-C(CH₃)₂-CH₂-; bevorzugt sind geradkettige Reste. R⁷ bedeutet als durch -O- unterbrochenes C₄-C₈-Alkylen beispielsweise -(CH₂)₂-O-(CH₂)₂-, -(CH₂)₃-O-(CH₂)₃-, -(CH₂)₂-O-(CH₂)₄- oder -(CH₂)₄-O-(CH₂)₄-, insbesondere -(CH₂)₂-O-(CH₂)₂-. Die Einheit (O-CH₂-CH₂) kann auch mehrfach vorhanden sein. Beispiele für solche Reste sind (CH₂)₂-(O-CH₂CH₂-)₂- und -(CH₂)₂-(O-CH₂CH₂-)₃-.

Der Index r ist nach oben offen, weil es sich bei den Sulfiden um amorphe, koordinativ vernetzte Gitterstrukturen handeln kann. Man kann auch wie in Formel VI auf die Darstellung dieses Sachverhalts verzichten. Formeln VI und VII sind somit im wesentlichen austauschbar. Beispielhafte Strukturen der Sulfide finden sich weiter unten unter "Typische Sulfide".

Die erfindungsgemäßen Zusammensetzungen enthalten als Komponente (c) vorzugsweise ein Gemisch von Verbindungen. Zusammensetzungen, welche als Komponente (c) nur eine Verbindung enthalten, sind jedoch auch Gegenstand der Erfindung und weisen die gleichen vorteilhaften Eigenschaften auf.

Enthalten die erfindungsgemäßen Zusammensetzungen als Verbindungen der Komponente (c) solche der Formeln I bis V, so sind diejenigen bevorzugt, worin
R¹ C₁-C₁₂-Alkyl bedeutet,
R², wenn Q für -S- steht, C₈-C₁₈-Alkyl oder ein Rest -R³-COO-R⁴ ist,
R², wenn Q für -O-CO- steht, C₇-C₁₈-Alkyl, C₈-C₁₈-Alkenyl, Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl oder C₅-C₇-Cycloalkyl bedeutet,
R⁶, wenn Q für -S- steht, Methylen, Ethylen oder o-Phenylen,
R⁶, wenn Q für -O-CO- steht, C₁-C₄-Alkylen, o-Phenylen oder eine Gruppe -CH=CH-bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, oder ein Rest -CH=CH-COO-R⁵ ist,
R⁹ Butylen, o-Phenylen oder eine Gruppe -CH=CH- bedeutet
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen.

Besonders bevorzugt bedeuten in den Verbindungen der Formeln 1 bis V
R¹ C₃-C₉-Alkyl,
R², wenn Q für -S- steht, einen Rest -R³-COO-R⁴,
R², wenn Q für -O-CO-steht, C₇-C₁₁-Alkyl oder einen Rest -CH=CH-COO-R⁵,
R³ Methylen oder Ethylen,
R⁴ C₈-C₁₈-Alkyl,
R⁵ C₁-C₁₈-Alkyl oder Cyclohexyl,
R⁶, wenn Q für -S- steht, Methylen oder Ethylen,
R⁶, wenn Q für -O-CO-steht, eine Gruppe -CH=CH-,
R⁷ -C₂H₄-,
R⁸ C₈-C₁₂-Alkyl oder einen Rest -CH=CH-COO-R⁵,
R⁹ eine Gruppe -CH=CH-,
i die Zahl 1 oder 2, j eine Zahl aus dem Bereich von 1 bis 6, k eine Zahl aus dem Bereich von 1 bis 3 und m eine Zahl aus dem Bereich von 1 bis 4.

Die Substituenten an den genannten Gruppierungen -CH=CH- sind besonders bevorzugt cis-ständig (Z-konfiguriert) und leiten sich in den Verbindungen von der Maleinsäure ab.

Weiterhin besonders bevorzugt sind Zusammensetzungen, die als Komponente (c) mindestens eine Verbindung der Formel I oder II enthalten, worin
R¹ Butyl oder Octyl, R³ -CH₂-, R⁷ -C₂H₄- sind, im Fall Q = S: R² für -CH₂-COO-R⁴ steht und R⁴ C₈-C₁₂-Alkyl ist, sowie im Fall Q = O-CO: R² für -CH=CH-COO-R⁵ und R⁵ für C₁-C₁₈-Alkyl stehen.

Bevorzugt sind in den erfindungsgemäßen Zusammensetzungen 20 bis 50% der Komponente (a) und 80 bis 50% der Komponente (b) enthalten.

Komponente (c) ist im allgemeinen zu 0,5 bis 5 Gew.-% [bezogen auf (a) und (b)], insbesondere zu 1,5 bis 4% enthalten, Komponente (d) zweckmäßig zu 0,1 bis 4 Gew.-% (bezogen auf (a) und (b)), besonders zu 1 bis 2,5%.

Bevorzugt sind Polymerzusammensetzungen, die als Komponenten (a) und (b) eine Mischung aus 25-75 Gew.-% PVC und 75-25 Gew.-% ABS enthalten. Beispiele für solche Zusammensetzungen sind: 25-50 Gew.-% PVC und 75-50 Gew.-% ABS bzw. 40-75 Gew.-% PVC und 60-25 Gew.-% ABS.

In den Verbindungen der Komponente (d) können als Metalle z.B. Li, Na, K, Mg, Ca, Sr oder Ba vorhanden sein. Bevorzugt sind als Komponente (d) die Verbindungen NaOH, KOH und Ca(OH)₂, CaO, MgO und Mg(OH)₂, besonders bevorzugt CaO, Ca(OH)₂, MgO oder Mg(OH)₂ und vor allem bevorzugt CaO.

Die erfindungsgemäße Zusammensetzung enthält die Komponenten (c) und (d) bevorzugt im Mengenverhältnis 0,8 bis 50 Gewichtsteile (c) zu 1 Gewichtsteil (d), vor allem 2 bis 35 Gewichtsteile (c) zu 1 Gewichtsteil (d).

Die zum Begriff gewordene Abkürzung "PVC" ist dem Fachmann geläufig. Was man darunter versteht, ist in gängigen Nachschlagewerken abgehandelt [Z.B. Ullmanns Encyclopedia of Industrial Chemistry, 5th Ed. (1985)].

Bei ABS handelt es sich um ein Copolymer von Styrol, Acrylnitril und Butadien. Die elastomere Komponente, für gewöhnlich Butadien oder ein Butadiencopolymer, ist dabei als diskrete Phase in der thermoplastischen Komponente, einem Styrol/Acrylnithlcopolymer, vorhanden. Die Herstellung der Elastomerteilchen geschieht nach bekannten Verfahren, wie durch Massepolymerisation oder Suspensionspolymerisation, insbesondere aber durch Emulsionspolymerisation. Die Elastomerteilchen sind schwach vernetzt und haben im allgemeinen einen durchschnittlichen Durchmesser von 0,1 bis 50 µm, vorzugsweise 0,5 bis 5 µm. Über die vielfältige Verwendung von ABS siehe z.B. H.B. Savenije, Kunststoffe **83**, 763 (1993).

Die Herstellung der erfindungsgemäßen Zusammensetzungen erfolgt nach bekannten Verfahren. Die Stabilisatoren werden den Polymerblends vor oder während der Verarbeitung in bekannter Weise zugemischt. Eine homogene Mischung kann z.B. vor der Verarbeitung mit Hilfe eines Heiz-Kühl-Mischers bei üblicherweise bis 120°C in der Heizphase erhalten werden.

Die erfindungsgemäßen Zusammensetzungen können vorteilhafterweise auch übliche Mengen weiterer, herkömmlicher PVC-Stabilisatoren und/oder weiterer Zusätze enthalten, beispielsweise Epoxyverbindungen, Metallseifen, das sind im wesentlichen Metallcarboxylate und Metallphenolate von Metallen der zweiten Haupt- und Nebengruppe des Periodensystems, oder auch anorganische Salze von Metallen der zweiten Nebengruppe des Periodensystems, sowie Antioxidantien.

Die soeben genannten weiteren Stabilisatoren werden bevorzugt in Mengen von 0,05 bis 6, insbesondere 0,1 bis 3 %, bezogen auf die gesamte Zusammensetzung, eingearbeitet.

Metallseifen sind in der Hauptsache Metallcarboxylate bevorzugt längerkettiger Carbonsäuren. Geläufige Beispiele sind Stearate und Laurate, auch Oleate und Salze kürzerkettiger Alkylcarbonsäuren. Oft verwendet man sog. synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed. Vol. A16 (1985)S.361 ff).

Bevorzugte Antioxidantien sind alkylierte Monophenole, Alkyliden-bis-phenole und mit sog. sterisch gehinderten Phenolresten substituierte Propionsäureester, z.B. 2,6-Di-tert-butyl-p-kresol, 2,2-Bis-(4'-hydroxyphenyl)-propan und β-(3,5-Di-tert-butyl-4-hydroxyphenyl)-propionsäure-n-octadecylester.

Je nach dem Verwendungszweck der erfindungsgemäßen Zusammensetzungen können vor oder mit der Einarbeitung des Stabilisators auch noch weitere Zusätze eingearbeitet werden, wie z.B. Gleitmittel (bevorzugt Montanwachse, Glycerinester, Fettsäureester oder Paraffine), Füllstoffe (Ruß, Kaolin, TiO₂, Talk, Silikate, Glasfasern), Pigmente, Lichtstabilisatoren, UV-Absorber, Flammschutzmittel und Antistatika. Vorzugsweise gehören solche weiteren Zusätze nicht zu den Hydrotalciten.

Bevorzugte derartige Zusätze sind Gleitmittel, Pigmente, Verarbeitungshilfen, Füllstoffe, Antioxidantien und/oder Lichtschutzmittel.

Die Komponenten (c) und (d) der erfindungsgemäßen Zusammensetzungen sowie optionale Zusätze können den zu stabilisierenden Polymeren auch in Form eines Masterbatches zugesetzt werden. Dieser kann beispielsweise 10 bis 40 Gew.-% der Komponente (c), 1 bis 20 Gew.-% der Komponente (d), und Polymere der Komponenten (a) oder (b), Costabilisatoren wie Verarbeitungshilfen, Gleitmittel, Flammschutzmittel oder eine Kombination dieser Stoffe enthalten.

Die erfindungsgemäßen Zusammensetzungen können nach den dafür gebräuchlichen Formgebungsverfahren, z.B. durch Spritzgießen oder Extrusion, zu Formteilen verarbeitet werden.

Bevorzugt werden die erfindungsgemäßen Zusammensetzungen für die Herstellung von Spritzgußteilen verwendet. Diese Verwendung ist ebenfalls Gegenstand der Erfindung. Beispiele für derartige Teile sind Rohre, Fittings und Apparategehäuse, z.B. für Telephone und Computer.

Die Organozinnverbindungen der Formeln I bis VII sind bekannt (Siehe z.B. die eingangs genannten Literaturstellen sowie US 5,021,491 und die dort referierten: US 2,731,482, US 2,731,484, US 2,713,585, US 2,648,650, US 3,507,827). Insbesondere kann es sich um Carboxylate, Mercaptide und Sulfide handeln.
- Typische Mercaptide sind: Methylzinntris(alkylthioglykolat) oder -(alkylthiopropionat), n-Butylzinn-tris(alkylthioglykolat), n-Butoxycarbonylethylzinn-tris(alkylthioglykolat), Dimethylzinn-bis(alkylthioglykolat) oder -(alkylthiopropionat); Di-n-butylzinn-bis(alkylthioglykolat) oder -(alkylthiopropionat); Bis-n-butoxycarbonylethyl)zinn(alkylthioglykolat) sowie n-Octylzinn-tris(isooctylthioglykolat).
- Typische Sulfide der Formeln VI und VII sind 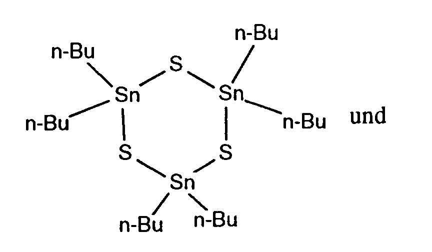 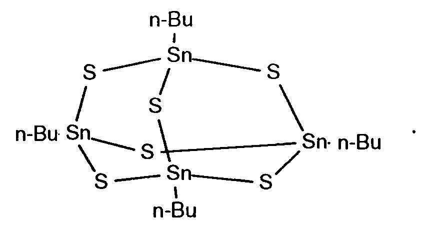
- Typische Carboxylate sind Di-n-butylzinn-bis(methylmaleat),
   Di-n-butylzinn-bis-butylmaleat und polymeres Di-n-butylzinnmaleat. Auch bei den Carboxylaten kann es sich um Gemische handeln, wie z.B. das Gemisch bestehend aus 40 Gew.-% der Verbindung 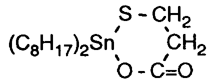 und 60 Gew.-% der Verbindung 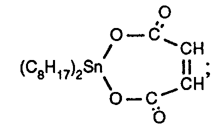 oder das Gemisch bestehend aus 66,7 Gew.-% der Verbindung 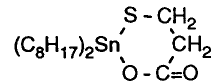 und 33,3 Gew.-% der Verbindung

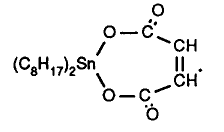

Gemeinsam mit den Verbindungen der Komponente (c) der Formeln I bis VII können in den erfindungsgemäßen Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch die erfindungsgemäßen Zusammensetzungen, welche neben den oben beschriebenen Organozinnverbindungen der Komponente (c) und deren Komproportionierungsprodukten keine weiteren Zinnstabilisatoren enthalten.

Aus der Chemie der Organozinnstabilisatoren weiß man, daß diese im stabilisierten Substrat oft nicht mehr in derselben Form vorliegen, wie sie zugegeben wurden. Es entstehen gewöhnlich Reaktions-(Komproportionierungs-)produkte. Die Erfindung umfaßt selbstverständlich auch Zusammensetzungen, die solche aus den Verbindungen der Komponente (c), entsprechend den Formeln I bis VII, entstandenen Produkte enthalten.

Die Erfindung betrifft auch die Stabilisatorkombination enthaltend die anfangs beschriebenen Komponenten (c) und (d) sowie gegebenenfalls weitere Zusätze.

Ein weiterer Gegenstand der Erfindung ist die Verwendung der soeben definierten Stabilisatorkombination zum Stabilisieren von Formmassen aus 20-75 Gew.-% eines Vinylchlorid-Homopolymeren (PVC) und 80-25 Gew.-% ABS. Dies schließt auch ein Verfahren zum Stabilisieren von Formmassen aus (a) 20-75 Gew.-% eines Vinylchlorid-Homopolymeren (PVC) und (b) 80-25 Gew.-% ABS ein, welches dadurch gekennzeichnet ist, daß man den Massen die genannte Stabilisatorkombination zusetzt.

Die folgenden Beispiele erläutern die Erfindung weiter, ohne sie jedoch in irgendeiner Weise zu beschränken. Teile und Prozente beziehen sich, wie auch in der übrigen Beschreibung, auf das Gewicht, sofern nichts anderes angegeben ist.

### Beispiel 1:

46 g der in der Tabelle I beschriebenen beiden PVC/ABS-Compounds (Zusammensetzungen gemäß Tabelle I) werden in der Knetkammer eines Brabender Plasticorders bei 45 UpM und 190°C thermisch und frikativ (durch Scherkräfte) belastet. Im Abstand von jeweils 5 min werden aus der plastifizierten PVC/ABS-Masse Proben entnommen (ca. 0,5 g) welche anschließend bei 180°C innerhalb von 1,5 min zu Prüfkörpern verpreßt werden. Von diesen Mustern wird durch farbmetrische Bestimmung der Farbabstandswert ΔE nach DIN 6174 (CIE-LAB 1976) ermittelt. Geringe Farbabstandswerte bedeuten gute Wirkung des Stabilisators. Die Werte sind in Tabelle II zusammengestellt.

**Tabelle I**

| **Brabender-Hitzetest bei 190°C** | | |
|---|---|---|
| Mischung | **1** [Teile] | **2** [Teile] |
| S-PVC K-Wert 57 | 35 | 35 |
| ABS | 65 | 65 |
| PMMA-Fließhilfe¹⁾ | 2,0 | 2,0 |
| Gleitmittel²⁾ | 1,25 | 1,25 |
| Gleitmittel³⁾ | 0,25 | 0,25 |
| Flammschutzmittel Sb₂O₃ | 4,0 | 4,0 |
| Chloriertes Polyethylen | 3,0 | 3,0 |
| MBS (impact modifier) | 5,0 | 5,0 |
| Organo-Sn-Mercaptid⁴⁾ | 2,4 | 2,4 |
| Calciumoxid | -- | 0,5 |

| | | |
|---|---|---|
| ¹⁾Polymethylmethacrylat | | |
| ²⁾Esterwachs | | |
| ³⁾Polyethylenwachs | | |
| ⁴⁾ Gemisch aus 30% Mono-n-butylzinn-tris(i-octylthioglycolat) und 70% Di-n-butylzinn-bis(i-octylthioglycolat) | | |

**Tabelle II**

| Farbabstandswert der Prüfkörper aus nach den angegebenen Zeiten entnommenen Proben Farbabstand ΔE (gemäß DIN 5033/DIN 6174) nach | | | | | | |
|---|---|---|---|---|---|---|
| Minuten | 15 | 20 | 25 | 30 | 35 | 40 |
| Mischung | | | | | | |
| **1** | 20,6 | 24,5 | 30,4 | 35,2 | 39,0 | Zersetzung |
| **2** | 19,8 | 23,7 | 29,6 | 32,8 | 35,8 | 40,5 |

Die Meßergebnisse zeigen für die erfindungsgemäße Zusammensetzung nach thermischer Belastung einen niedrigeren Farbabstandswert, was auf eine bessere thermostabilisierende Wirkung im Vergleich zur CaO-freien Zusammensetzung hinweist.

## Patentansprüche

1. Zusammensetzung enthaltend
(a) 20-75 Gew.-% eines Vinylchlorid-Homopolymeren (PVC),
(b) 80-25 Gew.-% ABS,
(c) mindestens eine Organozinnverbindung einer der Formeln I bis VII
[R¹]ᵢSn[-Q-R²]₄₋ᵢ (I) 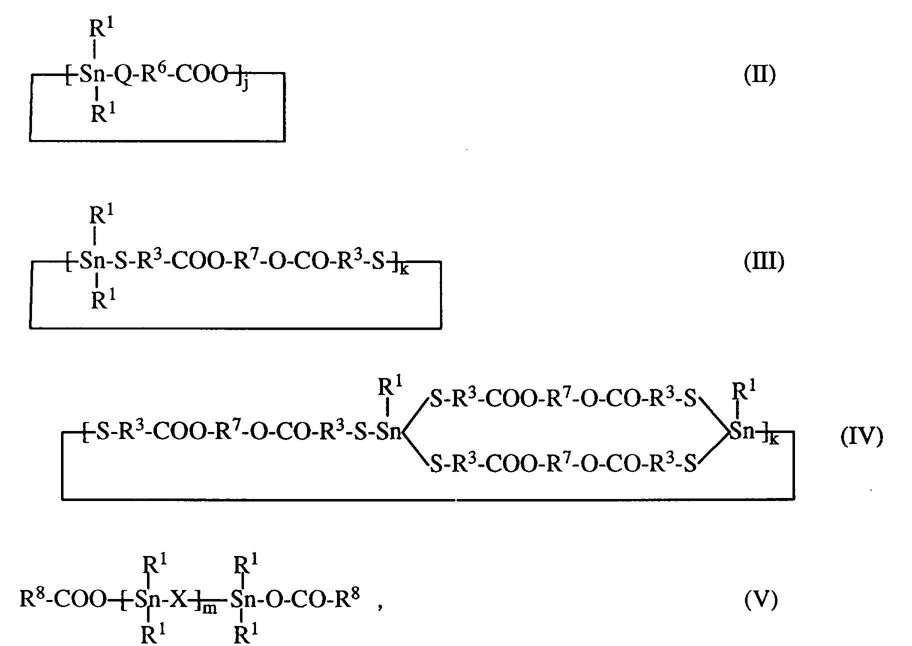
RₚSnS_{q} (VI)
oder
[RₚSnS_{q}]ᵣ (VII)
worin
R und
R¹ unabhängig voneinander C₁-C₁₂-Alkyl oder C₃-C₁₁-Alkoxycarbonylethyl bedeuten,
Q die Bedeutung von -S- oder -O-CO- hat und,
R², wenn Q für -S- steht, C₈-C₁₈-Alkyl oder ein Rest -R³-COO-R⁴ oder -R³-O-CO-R⁴ ist,
R², wenn Q für -O-CO- steht, C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl, C₅-C₇-Cycloalkyl oder Benzyl bedeuten,
R⁶, wenn Q für -S- steht, Methylen, Ethylen oder o-Phenylen,
R⁶, wenn Q für -O-CO- steht, C₁-C₈-Alkylen, o-Phenylen oder eine Gruppe -CH=CH-bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
X unabhängig voneinander die Bedeutung -O- oder -O-CO-R⁹-COO- hat,
R⁹ C₁-C₈-Alkylen, o-Phenylen oder eine Gruppe -CH=CH- bedeutet,
p 1 oder 2, q [(4-p)/2]und r > 1 sind,
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen,
sowie
(d) mindestens ein Oxid und/oder Hydroxid eines Alkali- oder Erdalkalimetalls.

2. Zusammensetzung gemäß Anspruch 1, worin in den Verbindungen der Formel I bis V
R¹ C₁-C₁₂-Alkyl bedeutet,
R², wenn Q für -S- steht, C₈-C₁₈-Alkyl oder ein Rest -R³-COO-R⁴ ist,
R², wenn Q für -O-CO- steht, C₇-C₁₈-Alkyl, C₈-C₁₈-Alkenyl, Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl oder C₅-C₇-Cycloalkyl bedeutet,
R⁶, wenn Q für -S- steht, Methylen, Ethylen oder o-Phenylen,
R⁶, wenn Q für -O-CO- steht, C₁-C₄-Alkylen, o-Phenylen oder eine Gruppe -CH=CH-bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, oder ein Rest -CH=CH-COO-R⁵ ist,
R⁹ Butylen, o-Phenylen oder eine Gruppe -CH=CH- bedeutet
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen.

3. Zusammensetzung gemäß Anspruch 2, worin in den Verbindungen der Komponente (c)
R¹ C₃-C₉-Alkyl bedeutet,
R², wenn Q für -S- steht, ein Rest -R³-COO-R⁴,
R², wenn Q für -O-CO-steht, C₇-C₁₁-Alkyl oder ein Rest -CH=CH-COO-R⁵ ist,
R³ Methylen oder Ethylen,
R⁴ C₈-C₁₈-Alkyl,
R⁵ C₁-C₁₈-Alkyl oder Cyclohexyl bedeutet,
R⁶, wenn Q für -S- steht, Methylen oder Ethylen,
R⁶, wenn Q für -O-CO- steht, eine Gruppe -CH=CH- bedeutet,
R⁷ -C₂H₄-,
R⁸ C₈-C₁₂-Alkyl oder einen Rest -CH=CH-COO-R⁵,
R⁹ eine Gruppe -CH=CH- bedeutet, und
i die Zahl 1 oder 2, j eine Zahl aus dem Bereich von 1 bis 6, k eine Zahl aus dem Bereich von 1 bis 3 und m eine Zähl aus dem Bereich von 1 bis 4 sind.

4. Zusammensetzung gemäß Anspruch 1, enthaltend als Komponente c) mindestens eine Verbindung der Formel I oder III, worin
R¹ Butyl oder Octyl,
R³ -CH₂-,
R⁷ -C₂H₄- sind,
im Fall Q = S R² für -CH₂-COO-R⁴ steht und R⁴ C₈-C₁₂-Alkyl ist,
im Fall Q = O-CO R² für -CH=CH-COO-R⁵ steht
und R⁵ C₁-C₁₈-Alkyl ist.

5. Zusammensetzung gemäß Anspruch 1, enthaltend als Komponente (a) 25-50 Gew.-% PVC und als Komponente (b) 75-50 Gew.-% ABS.

6. Zusammensetzung gemäß Anspruch 1, enthaltend als Komponente (a) 40-75 Gew.-% PVC und als Komponente (b) 60-25 Gew.-% ABS.

7. Zusammensetzung gemäß Anspruch 1, enthaltend als Komponente (d) mindestens einen der Stoffe MgO, Mg(OH)₂, CaO und Ca(OH)₂.

8. Zusammensetzung gemäß Anspruch 1, enthaltend Komponente (c) zu 0,5 bis 5 Gew.-% [bezogen auf (a) und (b)] und Komponente (d) zu 0,1 bis 4 Gew.-% [bezogen auf (a) und (b)].

9. Zusammensetzung gemäß Anspruch 1, enthaltend zusätzlich Verarbeitungshilfen, Gleitmittel, Flammschutzmittel oder eine Kombination dieser Stoffe.

10. Verwendung von Zusammensetzungen nach einem der Ansprüche 1-9 zur Herstellung von Formteilen im Spritzgußverfahren.

11. Stabilisatorkombination bestehend aus den in Anspruch 1 beschriebenen Komponenten (c) und (d).

12. Verwendung der Stabilisatorkombination gemäß Anspruch 11 zum Stabilisieren von Zusammensetzungen aus 20-75 Gew.-% eines Vinylchlorid-Homopolymeren (PVC) und 80-25 Gew.-% ABS.

13. Verfahren zum Stabilisieren von Zusammensetzungen aus 20-75 Gew.-% eines Vinylchlorid-Homopolymeren (PVC) und 80-25 Gew.-% ABS, durch Zugabe der Stabilisatorkombination gemäß Anspruch 11.
